(19) Europäisches Patentamt
European Patent Office
Office européen des brevets

(11) Publication number : **0 473 543 A2**

# (12) EUROPEAN PATENT APPLICATION

(21) Application number : **91810646.9**

(22) Date of filing : **14.08.91**

(51) Int. Cl.[5] : **C07F 9/6584,** C08K 5/5399

(30) Priority : **23.08.90 US 572729**
**23.08.90 US 572747**
**23.08.90 US 572749**

(43) Date of publication of application :
**04.03.92 Bulletin 92/10**

(84) Designated Contracting States :
**DE FR GB IT**

(71) Applicant : **CIBA-GEIGY AG**
**Klybeckstrasse 141**
**CH-4002 Basel (CH)**

(72) Inventor : **Hofmann, Peter, Dr.**
**Lerchenstrasse 57**
**CH-4059 Basle (CH)**

Inventor : **Odorisio, Paul A.**
**31, Columbia Terrace**
**Edgewater, NJ 07020 (US)**
Inventor : **Cunkle, Glen T.**
**99, Alton Road**
**Stamford, CT 06906 (US)**
Inventor : **Sabrsula, Don**
**944 Phoenix Avenue**
**Peekskill, NY 10566 (US)**
Inventor : **Hyun, James L.**
**6 Kevin Drive**
**Danbury, CT 06811 (US)**
Inventor : **Pastor, Stephen D.**
**27 Crows Nest Lane, Unit 4F**
**Danbury, CT 06810 (US)**
Inventor : **Shum, Sai P.**
**363 Elwood Avenue, Apt. No. 6**
**Hawthorne, NY 10532 (US)**
Inventor : **Seltzer, Raymond**
**11 Angus Lane**
**New City, NY 10956 (US)**

(54) **1,3,2-Oxazaphospholidine stabilizers.**

(57) Compounds of formulae I, V and VII

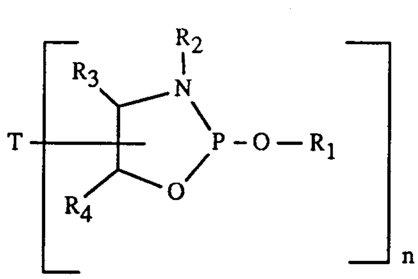
(I),

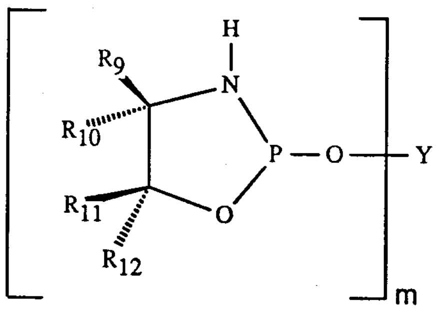
(V),

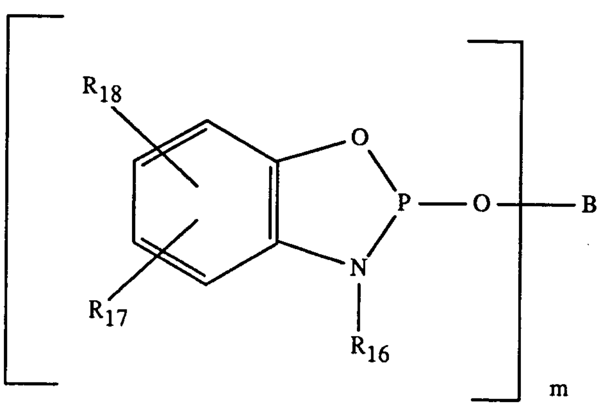
(VII)

wherein n, $R_1$-$R_4$, T, m, $R_9$-$R_{12}$, Y, $R_{16}$ -$R_{18}$ and B are as defined in claims 1, 8 and 12, are useful stabilizers for substrates subject to the deleterious effects of oxygen, heat and/or actinic radiation.

EP 0 473 543 A2

This invention pertains to new poly-1,3,2-oxazaphospholidines, to novel substituted 3H-1,3,2-oxazaphospholidines and to novel substituted 1,3,2-benzoxazaphospholidines as well as to their use as stabilizers for various organic materials subject to the deleterious effects of oxygen, heat and/or actinic radiation.

U.S. Patent Nos. 4,751,319; 4,812,501 and 4,831,178 describe 1,3,2-oxazaphospholidine stabilizers which are peripherally related, but which are structurally quite different from the instant poly-1,3,2-oxazaphospholidine compounds. The instant poly-1,3,2-oxazaphospholidines provide excellent melt flow stabilization and excellent resistance to discoloration during processing of polymeric substrates.

In U.S. Patent Nos. 4,751,319; 4,812,501 and 4,831,178 aliphatic and aryl esters of 1,3,2-oxazaphospholidines as color improvers and process stabilizers for various polymer substrates are disclosed. The compounds described in these patents are all substituted on the 3-N atom of the 1,3,2-oxazaphospholidine moiety by a tert-alkyl moiety. The instant 3H-1,3,2-oxazaphospholidine compounds are both structurally distinguished thereover and superior in stabilizing properties.

The instant 3H-1,3,2-oxazaphospholidines are not only distinguished from the prior art compounds structurally, but they exhibit surprising stabilizing properties which further distinguish them from the prior art. This is manifested in the superior processing stabilization of polymeric substrates in terms of melt flow stabilization and resistance to discoloration. When $R_9$ and $R_{10}$ are both alkyl (e.g. methyl), the instant 3H-1,3,2-oxazaphospholidines exhibit improved hydrolytic stability because of the gem-dialkyl groups.

U.S. Patent Nos. 4,751,319; 4,812,501 and 4,831,178 describe aliphatic and aryl esters of 1,3,2-oxazaphospholidines as color improvers and process stabilizers for various polymer substrates. The compounds described in the above mentioned US patents lack the benzo ring of the instant 1,3,2-benzoxazaphospholidine compounds, which are superior to the prior art compounds in stabilization effectiveness. The effect of the benzo ring is not obvious. There are electronic effects upon the heteroatoms (i.e. reduction in basicity of the nitrogen atom), changes in conformation and reactivity, the O-C=C-N fragment must be planar and a change in hydrolytic stability. U.S. Patent Nos. 3,574,797 and 3,773,711 describe 2-phenoxy-4,5-dibenzo-1-oxa-3-thia-2-phospholanes as polymer stabilizers. The instant 1,3,2-benzoxazaphospholidines are structurally clearly different from the materials disclosed in these patents. U.S. Patent Nos. 3,632,690 and 3,796,684 describe substituted 4,5-benzo-1,3,2-dioxaphospholanes as polymer stabilizers. The instant 1,3,2-benzoxazaphospholidine compounds are structurally clearly distinguished from the compounds disclosed in these patents. East German 146,464 and French 1,573,919 disclose 1H-1,3,2-benzodiazaphospholes as polymer stabilizers and antibacterials respectively. The instant compounds are clearly different from the compounds disclosed in these references. There are a number of academic studies carried on in the Soviet Union on the preparation and physical properties of the 2-methyl, 2-ethyl, 2-isopropyl, butyl and phenyl esters of 4,5-benzo-1,3,2-oxazaphospholanes. These references are Zh. Obshch. Khim, 52, 1302 (1982); *ibid*, 43, 1860 (1973), *ibid*, 54, 1283 (1984); *ibid*, 53, 2468 (1983); *ibid*, 49, 955 (1979); *ibid*, 45, 266 (1975); *ibid*, 43, 2619 (1973); *ibid*, 42, 1901 (1972); and *ibid*, 55, 1184 (1985); and Chem. Abst. 73, 14858e (Soviet Union 245,101). The instant compounds are structurally distinguished from each of the compounds disclosed in these prior art references and exhibit surprising stabilizing properties which further distinguish them from the prior art. This is manifested in the superior processing stabilization of polymeric substrates and in the maintenance of physical properties of polymeric substrates exposed to long-term thermooxidative stress.

One object of this invention is to provide new poly-1,3,2-oxazaphospholidine compounds, novel substituted 3H-1,3,2-oxazaphospholidines and novel substituted 1,3,2-benzoxazaphospholidine compounds which are effective stabilizers for organic materials subject to oxidative, thermal and/or actinic degradation.

A further object of this invention is to provide compositions stabilized against the deleterious effects of oxygen, heat and/or actinic radiation by containing one of the above mentioned compounds.

The instant invention pertains to poly-1,3,2-oxaza- phospholidine compounds of formula I

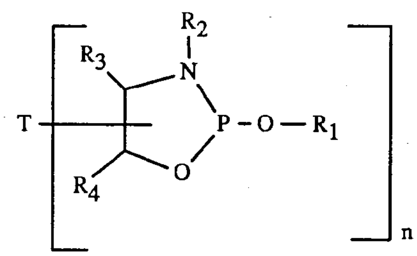

(I)

wherein n is an integer from 2 to 4, $R_1$ is alkyl of 1 to 20 carbon atoms, cycloalkyl of 5 to12 carbon atoms, phenylalkyl of 7 to 15 carbon atoms, said phenylalkyl substituted on the phenyl ring by one or two alkyl groups

of 1 to 12 carbon atoms, aryl of 6 to 10 carbon atoms or a radical of formula II

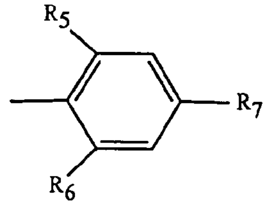
(II)

$R_2$, $R_3$ and $R_4$ are independently hydrogen, alkyl of 1 to 20 carbon atoms, cycloalkyl of 5 to 12 carbon atoms, phenylalkyl of 7 to 15 carbon atoms, said phenylalkyl substituted on the phenyl ring by one or two alkyl groups of 1 to 12 carbon atoms, aryl of 6 to 10 carbon atoms or said aryl substituted by one or two alkyl groups of 1 to 12 carbon atoms, or $R_3$ and $R_4$ together are straight or branched chain alkylene of 3 to 6 carbon atoms so that, with the two ring carbon atoms to which they are attached, they form a cycloalkyl ring of 5 to 6 carbon atoms, $R_5$ and $R_5$ are independently hydrogen, alkyl of 1 to 18 carbon atoms, cycloalkyl of 5 to 12 carbon atoms, phenylalkyl of 7 to 15 carbon atoms or said phenylalkyl substituted on the phenyl ring by one or two alkyl groups of 1 to 12 carbon atoms, $R_7$ is hydrogen, alkyl of 1 to 18 carbon atoms or a group of the formula $-(CH_2)_kCOOR_5$ where k is 0, 1 or 2, and $R_8$ is hydrogen or alkyl of 1 to 20 carbon atoms, and when n is 2, T is a direct bond, -O-, -S-, -SO-, $-SO_2-$, -CO- or -NR- where R is alkyl of 1 to 8 carbon atoms, or when n is 2-4, T is an n-valent aliphatic hydrocarbon radical containing 1 to 20 carbon atoms, which radical is linear or branched, or which radical is interrupted by one or more moieties selected from the group consisting of -O-, -S-, -SO-, $-SO_2-$, -CO-, -NR-, phenylene and mixtures thereof, where R is alkyl of 1 to 8 carbon atoms.

Preferably, $R_1$ is the radical of formula II

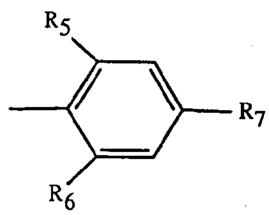
(II)

where $R_5$ , $R_5$ and $R_7$ are independently hydrogen, alkyl of 1 to 18 carbon atoms, cycloalkyl of 5 to 7 carbon atoms or phenylalkyl of 7 to 9 carbon atoms, or $R_7$ is also $-(CH_2)_k$ $-COOR_8$ where k is 0, 1 or 2 and $R_8$ is alkyl of 1 to 20 carbon atoms.

Most preferably, $R_1$ is the radical of formula II where $R_5$ is hydrogen or alkyl of 1 to 8 carbon atoms, $R_6$ is alkyl of 3 to 8 carbon atoms and $R_7$ is alkyl of 3 to 8 carbon atoms or $-CH_2CH_2COOR_5$ where $R_8$ is alkyl of 1 to 18 carbon atoms.

Preferably $R_2$ is alkyl of 1 to 8 carbon atoms; most preferably alkyl of 4 to 8 carbon atoms.

Preferably $R_3$ and $R_5$ are each hydrogen.

Preferably n is 2, and T is a straight or branched alkylene of 2 to 24 carbon atoms interrupted by two or more -O- atoms, or T is a group of formula III

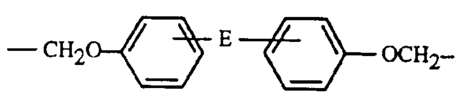
(III)

where E is a direct bond, $-CH_2-$, alkylidene of 2 to 8 carbon atoms, -O-, -S-, -SO-, $-SO_2-$or -NR-, where R is alkyl of 1 to 8 carbon atoms.

Most preferably T is alkylene of 6 to 10 carbon atoms interrupted by two or more -O-atoms, or T is a group of formula IV

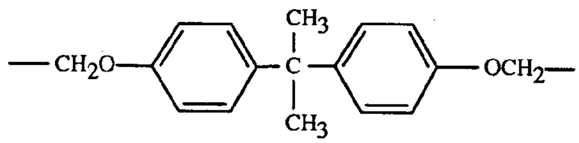

(IV)

When any of R to $R_8$ or T is alkyl, such alkyl groups are, for example, methyl, ethyl, isopropyl, n-butyl, tert-butyl, tert-amyl, 2-ethylhexyl, n-octyl, tert-octyl, lauryl, n-octadecyl and eicosyl; when said radicals are cycloalkyl, they are, for example, cyclopentyl, cyclohexyl, cyclooctyl and cyclododecyl; when said radicals are phenylalkyl, they are, for example, benzyl, phenethyl, a-methylbenzyl and a,a-dimethylbenzyl; when said radicals are aryl, they are, for example, phenyl, naphthyl, or when substituted by alkyl are, for example, tolyl and xylyl; when T is alkylene interrupted by -O- groups, T is, for example, 2,5-dioxahexamethylene, 2,7-dioxaoctamethylene or 2,5,8-trioxanonamethylene.

The above described poly-1,3,2-oxazaphospholidine compounds of this invention are conveniently prepared by the reaction of an alkyl phosphorodichloridite or an aryl phosphorodichloridite with a compound having two to four beta-amino substituted alcohol groups present. These latter compounds are easily prepared by adding a substituted amine to a polyepoxide compound such as the glycidyl substituted polyols like bisphenol A or an aliphatic glycol. The phosphorodichloridites are conveniently prepared by reaction of an alcohol or phenol with phosphorus trichloride. These intermediates are largely items of commerce.

The instant invention also pertains to compositions containing (a) an organic material subject to oxidative, thermal or actinic degradation and (b) a compound of formula I as stabilizer.

The instant invention also pertains to substituted 3H-1,3,2-oxazaphospholidines of formula V

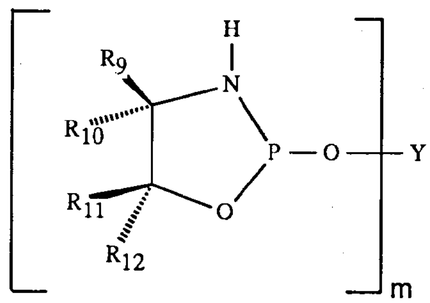

(V)

wherein $R_9$, $R_{10}$ , $R_{11}$ and $R_{12}$ are independently hydrogen, alkyl of 1 to 20 carbon atoms, cycloalkyl of 5 to 12 carbon atoms, phenylalkyl of 7 to 15 carbon atoms or said phenylalkyl substituted on the phenyl ring by one or two alkyl of 1 to 12 carbon atoms, aryl of 6 to 10 carbon atoms or said aryl substituted by one or two alkyl of 1 to 12 carbon atoms, or $R_9$ and $R_{10}$ together; or $R_{11}$ and $R_{12}$ together; or one of $R_9$ or $R_{10}$ together with one of $R_{11}$ or $R_{12}$ together; with the ring carbon atom or atoms to which they are attached form a cycloalkyl ring of 5 to 6 carbon atoms; m is an integer from 1 to 4, Y is an m-valent aliphatic or aromatic radical,

when m is 1, Y is alkyl of 1 to 20 carbon atoms, said alkyl interrupted by one to nine -O-, -S-, -SO-, $-SO_2-$, -CO-,-COO-, -NR\- or mixtures thereof where R\ has the same definition as $R_9$; or Y is aryl of 6 to 10 carbon atoms or said aryl substituted by one, two or three alkyl of 1 to 12 carbon atoms, or said aryl substituted by $-(CH_2)_k-COOR_8$ where k is 0,1 or 2 and $R_8$ is hydrogen or alkyl of 1 to 20 carbon atoms; or Y is phenylalkyl of 7 to 15 carbon atoms or where the alkyl is interrupted by one or two -O-. -S-, -SO- or $-SO_2-$, or where the phenyl ring is substituted by one, two or three alkyl of 1 to 12 carbon atoms; when m is 2, Y is straight or branched chain alkylene of 2 to 31 carbon atoms, said alkylene interrupted by one to seven -O-, -S-, -SO- or $-SO_2-$ moieties, cycloalkylene of 6 to 12 carbon atoms, phenylene, phenylene substituted by one to four alkyl groups of 1 to 4 carbon atoms, xylylene or phenylene-A-phenylene where A is a direct bond, methylene, alkylidene of 2 to 8 carbon atoms, -O-, -S-, -SO-, $-SO_2-$, -CO- or -NR\-;

when m is 3, Y is alkanetriyl of 3 to 8 carbon atoms or benzenetriyl; and

when m is 4, Y is alkanetetrayl of 4 to 6 carbon atoms.

Preferably, $R_9$, $R_{10}$ , $R_{11}$ and $R_{12}$ are independently hydrogen or alkyl of 1 to 4 carbon atoms.

Preferably, m is 1 and Y is a radical of formula VI

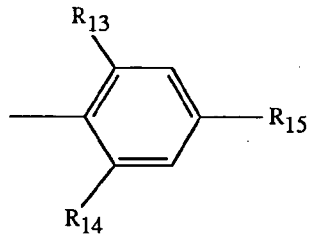

(VI)

wherein $R_{13}$, $R_{14}$ and $R_{15}$ are independently hydrogen, alkyl of 1 to 18 carbon atoms, cycloalkyl of 5 to 7 carbon atoms or phenylalkyl of 7to 9 carbon atoms, or $R_{15}$ is also $-(CH_2)_k-COOR_8$ where k is 0, 1 or 2 and $R_8$ is hydrogen or alkyl of 1 to 20 carbon atoms.

Most preferably, $R_9$ and $R_{10}$ are hydrogen or methyl, and $R_{11}$ and $R_{12}$ are hydrogen.

Most preferably, m is 1 and Y is a radical of formula VI where $R_{13}$ is hydrogen or alkyl of 1 to 8 carbon atoms, $R_{14}$ is alkyl of 3 to 8 carbon atoms and $R_{15}$ is alkyl of 3 to 8 carbon atoms or $-CH_2CH_2COOR_8$ where $R_8$ is alkyl of 1 to 18 carbon atoms.

When any of $R_9$ to $R_{15}$ or Y is alkyl, such alkyl groups are, for example, methyl, ethyl, isopropyl, n-butyl, tert-butyl, tert-amyl, 2-ethylhexyl, n-octyl, tert-octyl, lauryl, n-octadecyl and eicosyl; when said radicals are cycloalkl, they are, for example, cyclopentyl, cyclohexyl, cyclooctyl and cyclododecyl; when said radicals are phenylalkyl, they are for example, benzyl, phenethyl, a-methylbenzyl and a,a-dimethylbenzyl; when said radicals are aryl, they are, for example, ptienyl and naphthyl, or when substituted by alkyl are, for example, tolyl and xylyl; when said radicals are alkyl interrupted by -O-, they are, for example, 3-oxaamyl and 3,6-dioxaoctyl; when Y is alkylene, said alkylene interrupted by -O- or cycloalkylene, Y is,for example, ethylene, trimethylene, tetramethylene, hexamethylene, 2,2-dimethylpropane- 1,3-diyl, cyclohexylene, 3-oxapentamethylene and 3,6-dioxaoctamethylene; when Y is alkanetriyl, it is, for example glyceryl, trimethylyl propane; and when Y is alkanetetrayl, Y is, for example, pentaerythrityl and 1,2,3,4-butanetetrayl.

The 3H-1,3,2-oxazaphospholidine compounds of this invention are conveniently prepared by the reaction of a beta-aminolkanol with an alkyl phosphorodichloridite or an aryl phosphorodichloridite. The beta-aminoalkanols are laregely items of commerce while the phosphorodichloridites are conveniently prepared by reaction of an alcohol or phenol with phosphorus trichloride.

The instant invention also pertains to compositions containing (a) an organic material subject to oxidative, thermal or actinic degradation and (b) a compound of formula V as stabilizer.

Another feature of the instant invention are novel substituted 1,3,2-benzoxazaphospholidines of formula VII

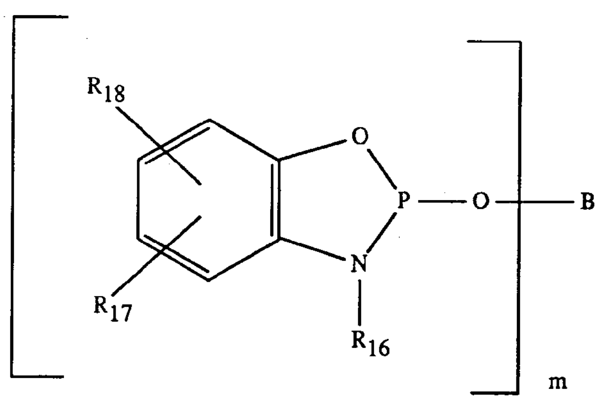

(VII)

wherein m is an integer from 1 to 4, $R_{16}$, $R_{17}$ and $R_{18}$ are independently hydrogen, alkyl of 1 to 18 carbon atoms, cycloalkyl of 5 to 12 carbon atoms, phenylalkyl of 7 to 15 carbon atoms or said phenylalkyl substituted on the phenyl ring by alkyl of 1 to 12 carbon atoms, aryl of 6 to 10 carbon atoms or said aryl substituted by one or two alkyl of 1 to 12 carbon atoms, and B is an m-valent aliphatic or aromatic radical,
when m is 1, B is alkyl of 8 to 20 carbon atoms, said alkyl interrupted by one to nine -O-, -S-, -SO- $-SO_2-$, -CO-, -COO-, $-CONR_{19}-$ or $-NR_{20}-$ or mixtures thereof where $R_{19}$ and $R_{20}$ independently have the same definitions as $R_{16}$, or B is aryl of 6 to 10 carbon atoms which is substituted by one, two or three alkyl of 1 to 12 carbon atoms or said aryl substituted by $-(CH_2)_k-COOR_{21}$ where k is 0, 1, or 2, and $R_{21}$ is alkyl of 1 to 20 carbon atoms, or

B is phenylalkyl of 7 to 15 carbon atoms or where the alkyl is interrupted by one or two -O-, -S-, -SO- or $-SO_2-$, or where the phenyl ring is substituted by one, two or three alkyl of 1 to 12 carbon atoms,
when m is 2, B is a straight or branched chain alkylene of 2 to 31 carbon atoms, said alkylene interrupted by one to seven -O-, -S-, -SO- or $-SO_2-$ moieties, cycloalkylene of 6 to 12 carbon atoms, phenylene, phenylene substituted by one to four alkyl groups of 1 to 4 carbon atoms, xylylene, or phenylene-A-phenylene where A is a direct bond, methylene, alkylidene of 2 to 8 carbon atoms, -O-, -S-, -SO-, $-SO_2-$, -CO- or $-NR_{20}$,
when m is 3, B is alkanetriyl of 3 to 6 carbon atoms or benzenetriyl, and
when m is 4, B is alkanetetrayl of 4 to 6 carbon atoms.

Preferably, $R_{16}$, $R_{17}$ and $R_{18}$ independendly are hydrogen or alkyl of 1 to 8 carbon atoms; most preferably $R_{17}$ and $R_{18}$ are independently hydrogen or methyl, and $R_{16}$ is hydrogen or alkyl of 1 to 8 carbon atoms.

Preferably, m is 1 and B is the monovalent radical of formula VIII

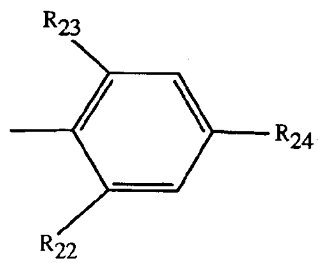

(VIII)

where $R_{22}$ , $R_{23}$ and $R_{24}$ are independently hydrogen, alkyl of 1 to 18 carbon atoms, cycloalkyl of 5 to 7 carbon atoms or phenylalkyl of 7 to 9 carbon atoms, or $R_{24}$ is also $-(CH_2)_k-COOR_{21}$ where k is 0, 1 or 2 and $R_{21}$ is alkyl of 1 to 20 carbon atoms.

Most preferably, m is 1 and B is formula VIII where $R_{22}$ is hydrogen or alkyl of 1 to 8 carbon atoms, $R_{23}$ is alkyl of 3 to 8 carbon atoms and $R_{24}$ is alkyl of 3 to 8 carbon atoms or $-CH_2CH_2COOR_{21}$ where $R_{21}$ is alkyl of 1 to 18 carbon atoms.

The instant invention also pertains to compositions containing (a) an organic material subject to oxidative, thermal or actinic degradation and (b) a compound of formula VII defined as above where additionally B is also alkyl of 1 to 20 carbon atoms or aryl of 6 to 10 carbon atoms, as stabilizer.

When any of $R_{16}$ to $R_{24}$ or B is alkyl, such alkyl groups are, for example, methyl, ethyl, isopropyl, n-butyl, tert-butyl, tert-amyl, 2-ethylhexyl, n-octyl, lauryl, n-octadecyl and eicosyl; when said radicals are cycloalkyl, they are, for example cyclopentyl, cyclohexyl, cyclooctyl and cyclododecyl; when said radicals are phenylalkyl, they are, for example, benzyl, phenethyl, a-methylbenzyl and a,a-dimethylbenzyl; when said radicals are aryl, they are, for example, phenyl, naphthyl, or when substituted by alkyl are, for example, tolyl and xylyl; when said radicals are alkyl interrupted by -O-, they are for example, 3-oxaamyl and 3,6-dioxaoctyl; when B is alkylene, said alkylene interrupted by -O- or cycloalkylene, B is, for example, ethylene, trimethylene, tetramethylene, hexamethylene, 2,2-dimethylpropane- 1,3-diyl, cyclohexylene, 3-oxapentamethylene and 3,6-dioxaoctamethylene; when B is alkanetriyl, it is, for example, glyceryl, trimethylyl propane; and when B is alkanetetrayl, B is, for example, pentaerythrityl or 1,2,3,4-butanetetrayl.

The 1,3,2-benzoxazaphospholidine compounds of this invention are conveniently prepared by the reaction of an ortho-aminophenol with an alkyl phosphorodichloridite or an aryl phosphorodichloridite. The ortho-aminophenols are largely items of commerce while the phosphorodichloridites are conveniently prepared by reaction of an alcohol or phenol with phosphorus trichloride.
The 1,3,2-benzoxazaphospholidines are also prepared by the reaction of an ortho-aminophenol with phosphorus trichloride to form the substituted benzoxazaphospholidine-2-chloro intermediate which is then reacted with an alcohol, glycol or phenol to give the instant compounds in the presence of an acid acceptor such as triethylamine.

Substrates in which the compounds of this invention are particularly useful are polyolefins such as polyethylene and polypropylene; polystyrene, including especially impact polystyrene; ABS resin; elastomers such as e.g. butadiene rubber, EPM, EPDM, SBR and nitrile rubber, and lubricating oils.

In general polymers which can be stabilized include

1. Polymers of monoolefins and diolefins, for example polyethylene (which optionally can be crosslinked), polypropylene, polyisobutylene, polybutene-1, polymethylpentene-1, polyisoprene or polybutadiene, as well as polymers of cycloolefins, for instance of cyclopenteneor norbornene.

2. Mixtures of the polymers mentioned under 1), for example mixtures of polypropylene with

polyisobutylene.

3. Copolymers of monoolefins and diolefins with each other or with other vinyl monomers, such as, for example, ethylene/propylene, propylene/butene-1, propylene/isobutylene, ethylene/butene-1, propylene-/butadiene, isobutylene/isoprene, ethylene/alkyl acrylates, ethylene/alkyl methacrylates, ethylene/vinyl acetate or ethylene/acrylic acid copolymers and their salts (ionomers) and terpolymers of ethylene with propylene and a diene, such as hexadiene, dicyclopentadiene or ethylidene-norbomene.

4. Polystyrene, poly-(p-methylstyrene).

5. Copolymers of styrene or methylstyrene with dienes or acrylic derivatives, such as, for example, styrene/butadiene, styrene/acrylonitrile, styrene/ethyl methacrylate, styrene/butadiene/ethyl acrylate, styrene/acrylonitrile/methyl acrylate; mixtures of high impact strength from styrene copolymers and another polymer, such as, for example, from a polyacrylate, a diene polymer or an ethylene/propylene/diene terpolymer, and block polymers of styrene, such as, for example, styrene/butadiene/styrene, styrene/isoprene/styrene, styrene/ethylene/butylene/styrene or styrene/ethylene/propylene/styrene.

6. Graft copolymers of styrene, such as, for example, styrene on polybutadiene, styrene and acrylonitrile on polybutadiene, styrene and alkyl acrylates or methacrylates on polybutadiene, styrene and acrylonitrile on ethylene/propylene/diene terpolymers, styrene and acrylonitrile on polyacrylates or polymethacrylates, styrene and acrylonitrile on acrylate/butadiene copolymers, as well as mixtures thereof with the copolymers listed under 5), for instance the copolymer mixtures known as ABS-, MBS-, ASA- or AES-polymers.

7. Halogen-containing polymers, such as polychloroprene, chlorinated rubbers, chlorinated or sulfochlorinated polyethylene, epichlorohydrin homo- and copolymers, polymers from halogen-containing vinyl compounds, as for example, polyvinylchloride, polyvinylidene chloride, polyvinyl fluoride, polyvinylidene fluoride, as well as copolymers thereof, as for example, vinyl chloride/vinylidene chloride, vinyl chloride/vinyl acetate, vinylidene chloride/vinyl acetate copolymers, or vinyl fluoride/vinyl ether copolymers.

8. Polymers which are derived from a,b-unsaturated acids and derivatives thereof, such as polyacrylates and polymethacrylates, polyacrylamide and polyacrylonitrile.

9. Copolymers from the monomers mentioned under 8) with each other or with other unsaturated monomers, such as, for instance, acrylonitrile/butadiene, acrylonitrile/alkyl acrylate, acrylonitrile/alkoxyalkyl acrylate or acrylonitrile/vinyl halogenide copolymers or acrylonitrile/alkyl methacrylate/butadiene terpolymers.

10. Polymers which are derived from unsaturated alcohols and amines, or acyl derivatives thereof or acetals thereof, such as polyvinyl alcohol, polyvinyl acetate, polyvinyl stearate, polyvinyl benzoate, polyvinyl maleate, polyvinylbutyral, polyallyl phthalate or polyallyl-melamine.

11. Homopolymers and copolymers of cyclic ethers, such as polyalkylene glycols, polyethylene oxide, polypropylene oxide or copolymers thereof with bis-glycidyl ethers.

12. Polyacetals, such as polyoxymethylene and those polyoxymethylenes which contain ethylene oxide as comonomer.

13. Polyphenylene oxides and sulfides, and mixtures of polyphenylene oxides with polystyrene.

14. Polyurethanes which are derived from polyethers, polyesters or polybutadienes with terminal hydroxyl groups on the one side and aliphatic or aromatic polyisocyanates on the other side, as well as precursors thereof (polyisocyanates, polyols or prepolymers).

15. Polyamides and copolyamides which are derived from diamines and dicarboxylic acids and/or from aminocarboxylic acids or the corresponding lactams, such as polyamide 4, polyamide 6, polyamide 6/6, polyamide 6/10, polyamide 11, polyamide 12, poly-2,4,4-trimethylhexamethylene terephthalamide, poly-p-phenylene terephthalamide or poly-m-phenylene isophthalamide, as well as copolymers thereof with polyethers, such as for instance with polyethylene glycol, polypropylene glycol or polytetramethylene glycols.

16. Polyureas, polyimides and polyamide-imides.

17. Polyesters which are derived from dicarboxylic acids and diols and/or from hydroxycarboxylic acids or the corresponding lactones, such as polyethylene terephthalate, polybutylene terephthalate, poly-1,4-dimethylol-cyclohexane terephthalate, poly-[2,2-(4-hydroxyphenyl)-propane] terephthalate and polyhydroxybenzoates as well as block-copolyether-esters derived from polyethers having hydroxyl end groups.

18. Polycarbonates.

19. Polysulfones, polyethersulfones and polyetherketones.

20. Crosslinked polymers which are derived from aldehydes on the one hand and phenols, ureas and melamines on the other hand, such as phenol/formaldehyde resins, urea/formaldehyde resins and melamine/formaldehyde resins.

21. Drying and non-drying alkyd resins.

22. Unsaturated polyester resins which are derived from copolyesters of saturated and unsaturated dicarboxylic acids with polyhydric alcohols and vinyl compounds as crosslinking agents, and also halogen-containing modifications thereof of low flammability.
23. Thermosetting acrylic resins, derived from substituted acrylic esters, such as epoxy-acrylates, urethane-acrylates or polyester acrylates.
24. Alkyd resins, polyester resins or acrylate resins in admixture with melamine resins, urea resins, polyisocyanates or epoxide resins as crosslinking agents.
25. Crosslinked epoxide resins which are derived from polyepoxides, for example from bis-glycidyl ethers or from cycloaliphatic diepoxides.
26. Natural polymers, such as cellulose, rubber, gelatin and derivatives thereof which are chemically modified in a polymer homologous manner, such as cellulose acetates, cellulose propionates and cellulose butyrates, or the cellulose ethers, such as methyl cellulose.
27. Mixtures of polymers as mentioned above, for example PP/EPDM, Polyamide 6/EPDM or ABS, PVC/EVA, PVC/ABS, PVC/MBS, PC/ABS, PBTP/ABS.
28. Naturally occuring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, which materials may be used as plasticizers for polymers or as textile spinning oils, as well as aqueous emulsions of such materials.
29. Aqueous emulsions of natural or synthetic rubber, e.g. natural latex or latices of carboxylated styrene/butadiene copolymers.
30. Polysiloxanes such as the soft, hydrophilic polysiloxanes described, for example, in U.S. Patent No. 4,259,467; and the hard polyorganosiloxanes described, for example, in U.S. Patent No. 4,355,147.
31. Polyketimines in combination with unsaturated acrylic polyacetoacetate resins or with unsaturated acrylic resins. The unsaturated acrylic resins include the urethane acrylates, polyether acrylates, vinyl or acryl copolymers with pendant unsaturated groups and the acrylated melamines. The polyketimines are prepared from polyamines and ketones in the presence of an acid catalyst.
32. Radiation curable compositions containing ethylenically unsaturated monomers or oligomers and a polyunsaturated aliphatic oligomer.
33. Epoxymelamine resins such as light-stable epoxy resins crosslinked by an epoxy functional coetherified high solids melamine resin such as LSE-4103 (Monsanto).
In general, the compounds of the present invention are employed for example from 0.01 to 5% by weight of the stabilized composition, although this will vary with the particular substrate and application. An advantageous range is for example from 0.5 to 2%, and especially from 0.1 to 1%.

The stabilizers of the instant invention may readily be incorporated into the organic polymers by conventional techniques, at any convenient stage prior to the manufacture of shaped articles therefrom. For example, the stabilizer may be mixed with the polymer in dry powder form, or a suspension or emulsion of the stabilizer may be mixed with a solution, suspension, or emulsion of the polymer. The resulting stabilized polymer compositions of the invention may optionally also contain for example from 0.01 to 5%, preferably from 0.025 to 2%, and especially from 0.1 to 1% by weight of various conventional additives, such as the materials listed below, or mixtures thereof.

1. Antioxidants

1.1. Alkylated monophenols, for example, 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-i-butylphenol, 2,6-di-cyclopentyl-4-methylphenol, 2-(a-methylcyclohexyl)-4,6-dimethylphenol, 2,6-di-octadecyl-4-methylphenol, 2,4,6-tri-cyclohexylphenol, 2,6-di-tert-butyl-4-methoxymethylphenol

1.2. Alkylated hydroquinones, for example, 2,6-di-tert-butyl-4-methoxyphenol, 2,5-di-tert-butyl-hydroquinone, 2,5-di-tert-amyl-hydroquinone, 2,6-diphenyl-4-octadecyloxyphenol

1.3. Hydroxylated thiodiphenyl ethers, for example, 2,2′-thio-bis-(6-tert-butyl-4-methylphenol), 2,2′-thio-bis-(4-octylphenol), 4,4′-thio-bis-(6-tert-butyl-3-methylphenol), 4,4′-thio-bis-(6-tert-butyl-2-methylphenol)

1.4. Alkylidene-bisphenols, for example, 2,2′-methylene-bis-(6-tert-butyl-4-methylphenol), 2,2′-methylene-bis-(6-tert-butyl-4-ethylphenol), 2,2′-methylene-bis-[4-methyl-6-(a-methylcyclohexyl)-phenol], 2,2′-methylene-bis-(4-methyl-6-cyclohexylphenol), 2,2′-methylene-bis-(6-nonyl-4-methylphenol), 2,2′-methylene-bis-[6-(a-methylbenzyl)-4-nonylphenol], 2,2′-methylene-bis- [6-(a,a-dimethylbenzyl)-4-nonylphenol], 2,2′-methylene-bis-(4,6-di-tert-butylphenol), 2,2′-ethylidene-bis-(4,6-di-tert-butylphenol), 2,2′-ethylidene-bis-(6-tert-butyl-4-isobutylphenol), 4,4′-methylene-bis-(2,6-di-tert-butylphenol), 4,4′-methylene-bis-(6-tert-butyl-2-methylphenol), 1,1-bis-(5-tert-butyl-4-hydroxy-2-methylphenyl-butane, 2,6-di-(3-tert-butyl-5-methyl-2-hydroxybenzyl)-4-methylphenol, 1,1,3-tris-(5-tert-butyl-4-hydroxy-2-methylphenyl)-butane, 1,1-bis-(5-tert-butyl4-hydroxy-2-methylphenyl)-3-n-dodecylmercaptobutane, ethyleneglycol bis-[3,3-bis-(3′tert-butyl-4′-hydroxyphenyl)-butyrate], di-(3-tert-butyl-4-hydroxy-5-methylphenyl)-dicyclopentadiene,
di-[2-(3′-tert-butyl-2′-hydroxy-5′-methyl-benzyl)-6-tert-buty 1-4-methylphenyl] terephthalate.

1.5. Benzyl compounds, for example, 1,3,5-tri-(3,5-di-tert-butyl-4-hydroxybenzyl)-2,4,6-t rimethyl benzene, di-(3,5-di-tert-butyl-4-hydroxybenzyl) sulfide, 3,5-di-tert-butyl-4-hydroxybenzyl-mercapto-acetic acid isooctyl ester, bis-(4-tert-butyl-3-hydroxy-2,6-dimethylbenzyl)dithiol terephthalate, 1,3,5-tris-(3,5-di-tert-butyl-4-hydroxybenzyl) isocyanurate, 1,3,5-tris-(4-tert-butyl-3-hydroxy-2,6-dimethylbenzyl) isocyanurate, 3,5-di-tert-butyl-4-hydroxybenzyl-phosphoric acid dioctadecyl ester, 3,5-di-tert-butyl4-hydroxybenzyl-phosphoric acid monoethyl ester, calcium-salt,

1.6. Acylaminophenols, for example, 4-hydroxy-lauric acid anilide, 4-hydroxy-stearic acid anilide, 2,4-bis-octylmercapto-6-(3,5-tert-butyl-4-hydroxyanilino)-s-t riazine, octyl-N-(3,5-di-tert-butyl-4-hydroxyphenyl)-carbamate

1.7. Esters of b-(3,5-di-tert-butyl-4-hydroxyphenyl)-propionic acid with monohydric or polyhydric alcohols, for example, methanol, ethylene glycol, octadecanol, triethylene glycol, 1,6-hexanediol, pentaerythritol, neopentyl glycol, tris-hydroxyethyl isocyanurate, thiodiethylene glycol, di-hydroxyethyl oxalic acid diamide. acid diamide

1.8. Esters of b-(5-tert-butyl-4-hydroxy-3-methylphenyl)-propionic acid with monohydric or polyhydric alcohols, for example, methanol, diethylene glycol, octadecanol, triethylene glycol, 1,6-hexanediol, pentaerythritol, neopentyl glycol, tris-hydroxyethyl isocyanurate, thiodiethylene glycol, di-hydroxyethyl oxalic acid diamide

1.9. Amides of b-(3,5-di-tert-butyl-4-hydroxyphenyl)-propionic acid for example,
N,N′-di-(3,5-di-tert-butyl-4-hydroxyphenylpropionyl)- hexamethylenediamine,
N,N′-di-(3,5-di-tert-butyl-4-hydroxyphenylpropionyl)-trimethy lenediamine,
N,N′-di-(3,5-di-tert-butyl-4-hydroxyphenylpropionyl)-hydrazine

1.10 Diarylamines, for example, diphenylamine, N-phenyl-1-naphthylamine, N-(4-tert-octylphenyl)-1-naphthylamine, 4,4′-di-tert-octyl-diphenylamine, reaction product of N-phenylbenzylamine and 2,4,4-trimethylpentene, reaction product of diphenylamine and 2,4,4-trimethylpentene, reaction product of N-phenyl-1 -naphthylamine and 2,4,4-trimethylpentene.

2. UV absorbers and light stabilizers

2.1. 2-(2′-Hydroxyphenyl)-benzotriazoles, for example, the 5′-methyl-, 3′,5′-di-tert-butyl-, 5′-tert-butyl-, 5′-(1,1,3,3-tetramethylbutyl)-, 5-chloro-3′,5-di-tert-butyl-, 5-chloro-3′-tert-butyl-5′-methyl-, 3′-sec-butyl-5′-tert-butyl-, 4′-octoxy, 3′,5′-di-tert-amyl-, 3′,5′-bis-(a,a-dimethylbenzyl), 3′-tert-butyl-5′-(2-(omega-hydroxy-octa-(ethylene-oxy)carbonyl-ethyl)-, 3′-dodecyl-5′-methyl-, and 3′-tert-butyl-5′-(2-octyloxycarbonyl)ethyl-, and dodecylated-5′-methyl derivatives.

2.2. 2-Hydroxy-benzophenones, for example, the 4-hydroxy-, 4-methoxy-, 4-octoxy, 4-decyloxy-, 4-dodecyloxy-, 4-benzyloxy, 4,2′,4′-trihydroxy- and 2′-hydroxy-4,4′-dimethoxy derivatives.

2.3. Esters of optionally substituted benzoic acids for example, phenyl salicylate, 4-tert-butylphenyl salicylate, octylphenyl salicylate, dibenzoylresorcinol, bis-(4-tert-butylbenzoyl)-resorcinol, benzoylresorcinol, 3,5-di-tert-butyl-4-hydroxybenzoic acid 2,4-di-tert-butylphenyl ester and 3,5-di-tert-butyl-4-hydroxybenzoic acid hexadecyl ester.

2.4. Acrylates, for example, a-cyano-b,b-diphenylacrylic acid ethyl ester or isooctyl ester, a-carbomethoxy-cinnamic acid methyl ester, a-cyano-b-methyl-p-methoxy-cinnamic acid methyl ester or butyl ester, a-carbomethoxy-p-methoxy-cinnamic acid methyl ester, N-(b-carbomethoxy-b-cyanovinyl)-2-methyl-indoline.

2.5. Nickel compounds, for example, nickel complexes of 2,2′-thio-bis-[4-(1, 1,3,3-tetra-methylbutyl)-phenol], such as the 1:1 or 1:2 complex, optionally with additional ligands such as n-butylamine, triethanolamine or N-cyclohexyl-diethanolamine, nickel dibutyldithiocarbamate, nickel salts of 4-hydroxy-3,5-di-tert-butylbenzylphosphonic acid monoalkyl esters, such as of the methyl, ethyl or butyl ester, nickel complexes of ketoximes such as of 2-hydroxy-4-methyl-phenyl undecyl ketoxime, nickel complexes of 1-phenyl-4-lauroyl-5-hydroxy-pyrazole, optionally with additional ligands.

2.6. Sterically hindered amines, for example bis-(2,2,6,6-tetramethylpiperidyl) sebacate, bis-(1,2,2,6,6-pentamethylpiperidyl) sebacate, n-butyl-3,5-di-tert.butyl-4-hydroxybenzyl malonic acid bis-(1,2,2,6,6-pentanemethylpiperidyl)ester, condensation product of 1-hydroxyethyl-2,2,6,6-tetramethyl-4-hydroxypiperidine and succinic acid, condensation product of N,N′-(2,2,6,6-tetramethylpiperidyl)-hexamethylenediamine and 4-tert-octyl-amino-2,6-dichloro-s-triazine, tris-(2,2,6,6-tetramethylpiperidyl)-nitrilotriacetate, tetrakis-(2,2,6,6-tetramethyl-4-piperidyl) 1,2,3,4-butanetetracarboxylate, 1,1′(1,2-ethane-diyl)-bis-(3,3,5,5-tetramethylpiperazinone).

2.7. Oxalic acid diamides, for example, 4,4′-di-octyloxy-oxanilide, 2,2′-di-octyloxy-5,5′-di-tert-butyl-oxanilide, 2,2′-di-dodecyloxy-5,5′-di-tert-butyl-oxanilide, 2-ethoxy-2′-ethyl-oxanilide, N,N′-bis (3-dimethylaminopropyl)-oxalamide, 2-ethoxy-5-tert-butyl-2′-ethyloxanilide and its mixture with 2-ethoxy-2′-ethyl-5,4′-di-tert-butyloxanilide and mixtures of ortho- and para-methoxy- as well as of o- and p-ethoxy-di-substituted oxanilides.

2.8. Hydroxyphenyl-s-triazines, for example 2,6-bis-(2,4-dimethylphenyl)-4-(2-hydroxy-4-octyloxyphenyl)-s-triazine;
2,6-bis-(2,4-dimethylphenyl)-4-(2,4-dihydroxyphenyl)-s-triazine; 2,4-bis(2,4-dihydroxyphenyl)-6-(4-chlorophenyl)-s-triazine,
2,4-bis[2-hydroxy-4(2-hydroxyethoxy)phenyl]-6-(4-chlorophenyl)-s-triazine; 2,4-bis[2-hydroxy-4-(2-hydroxy-4-(2-hydroxyethoxy)phenyl]-6-(2,4-dimethylphenyl)-s-triazine;
2,4-bis[2-hydroxy-4-(2-hydroxyethoxy)phenyl]-6-(4-bromophenyl)-s-triazine;
2,4-bis[2-hydroxy-4-(2-acetoxyethoxy)phenyl]-6-(4-chlorophenyl)-s-triazine,
2,4-bis(2,4-dihydroxyphenyl)-6-(2,4-dimethylphenyl)-s-triazine.

3. Metal deactivators, for example, N,N′-diphenyloxalic acid diamide, N-salicylal-N′-salicyloylhydrazine, N,N′-bis-salicyloylhydrazine, N,N′-bis-(3,5-di-tert-butyl-4-hydroxyphenylpropionyl)-hydrazine, 3-salicyloylamino- 1,2,4-triazole, bis-benzylidene-oxalic acid dihydrazide.

4. Phosphites and phosphonites, for example, triphenyl phosphite, diphenylalkyl phosphites, phenyldialkyl phosphites, tri-(nonylphenyl) phosphite, trilauryl phosphite, trioctadecyl phosphite, di-stearyl-pentaerythritol diphosphite, tris-(2,4-di-tert-butylphenyl) phosphite, di-isodecylpentaerythritol diphosphite, di-(2,4-di-tert-butylphenyl)pentaerythritol diphosphite, tristearyl-sorbitol triphosphite, tetrakis-(2,4-di-tert-butylphenyl) 4,4′-diphenylylenediphosphonite.

5. Compounds which destroy peroxide, for example, esters of b-thiodipropionic acid, for example the lauryl, stearyl, myristyl or tridecyl esters, mercapto-benzimidazole or the zinc salt of 2-mercaptobenzimidazole, zinc dibutyl-dithiocarbamate, dioctadecyl disulfide, pentaerythritol tetrakis-(b-dodecylmercapto)-propionate.

6. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

7. Nitrones, for example, N-benzyl-alpha-phenyl nitrone, N-ethyl-alpha-methyl nitrone, N-octyl-alpha-heptyl nitrone, N-lauryl-alpha-undecyl nitrone, N-tetradecyl-alpha-tridecyl nitrone, N-hexadecyl-alpha-pentadecyl nitrone, N-octadecyl-alpha-heptadecylnitrone, N-hexadecyl-alpha-heptadecyl nitrone, N-octadecyl-alpha-pentadecyl nitrone, N-heptadecyl-alpha-heptadecyl nitrone, N-octadecyl-alpha-hexadecyl nitrone, nitrone derived from N,N-dialkylhydroxylamine derived from hydrogenated tallow amine.

8. Polyamide stabilizers, for example copper salts in combination with iodides and/or phosphorus compounds and salts of divalent manganese.

9. Basic co-stabilizers, for example, melamine, polyvinylpyrrolidone,dicyandiamide, triallyl cyanurate, urea derivatives, hydrazine derivatives, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.

10. Nucleating agents, for example, 4-tert-butyl-benzoic acid, adipic acid, diphenylacetic acid.

11. Fillers and reinforcing agents, for example, calcium carbonate, silicates, glass fibers, asbestos, talc, kaolin, mica, barium sulfate, metal oxides and hydroxides, carbon black, graphite.

12. Other additives, for example, plasticizers, lubricants, emulsifiers, pigments, optical brighteners, flameproofing agents, anti-static agents, blowing agents and thiosynergists such as dilauryl thiodipropionate or distearyl thiodipropionate.

The phenolic antioxidant of particular interest is selected from the group consisting of n-octadecyl 3,5-di-tert-butyl-4-hydroxyhydrocinnamate, neopentanetetrayl tetrakis-(3,5-di-tert-butyl-4-hydroxyhydrocinammate), di-n-octadecyl 3,5-di-tert-butyl-4-hydroxybenzylphosphonate, 1,3,5-tris(3,5-di-tert-butyl-4-hydroxybenzyl)isocyanurate, thiodiethylene bis(3,5-di-tert-butyl-4-hydroxyhydrocinnamate), 1,3,5-trimethyl-2,4,6-tris(3,5-di-tert-butyl-4-hydroxybenzyl)benzene, 3,6-dioxaoctamethylene bis(3-methyl-5-tert-butyl-4-hydroxyhydrocinnamate), 2,6-di-tert-butyl-p-cresol, 2,2′-ethylidene-bis(4,6-di-tert-butylphenol), 1,3,5-tris(2,6-dimethyl-4-tert-butyl-3-hydroxybenzyl)isocynurate, 1,1,3,-tris(2-methyl-4-hydroxy-5-tert-butylphenyl)butane, 1,3,5-tris[2-(3,5-di-tert-butyl-4-hydroxyhydrocinnamoyloxy)ethyl]isocyanur ate, 3,5-di-(3,5-di-tert-butyl-4-hydroxybenzyl)mesitol, hexamethylene bis(3,5-di-tert-butyl-4-hydroxyhydrocinnamate), 1-(3,5-di-tert-butyl-4-hydroxyanilino)-3,5-di(octylthio)-s-triazine, N,N′-hexamethylene-bis(3,5-di-tert-butyl-4-hydroxyhydrocinnamamide), calcium bis(ethyl 3,5-di-tert-butyl-4-hydroxybenzylphosphonate), ethylene bis[3,3-di(3-tert-butyl-4-hydroxyphenyl)butyrate], octyl 3,5-di-tert-butyl-4-hydroxybenzylmercaptoacetate, bis(3,5-di-tert-butyl-4-hydroxyhydrocinnamoyl)hydrazide, and N,N′-bis[2-(3,5-di-tert-butyl-4-hydroxyhydrocinnamoyloxy)-ethyl]-ox-amide.

A most preferred phenolic antioxidant is neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol or 2,2′-ethylidene-bis-(4,6-di-tert-butylphenol).

The hindered amine compound of particular interest is selected from the group consisting of bis(2,2,6,6-tetramethylpiperidin-4-yl) sebacate, bis(1,2,2,6,6-pentamethylpiperidin-4-yl) sebacate, di(1,2,2,6,6-pentamethylpiperidin-4-yl) (3,5-di-tert-butyl-4-hydroxybenzyl)butylmalonate, 4-benzoyl-2,2,6,6-tetramethylpiperidine, 4-stearyloxy-2,2,6,6-tetra-methylpiperidine, 3-n-octyl-7,7,9,9-tetramethyl- 1,3,8-triaza-spiro[4.5]decane-2,4-dione, tris(2,2,6,6-tetramethylpiperidin-4-yl) nitrilotriacetate, 1,2-bis(2,2,6,6-tetramethyl-3-oxo-piperazin-4-yl)ethane, 2,2,4,4-tetramethyl-7-oxa-3,20-diaza-21-oxodispiro[5.1. 11.2] heneicosane, polycondensation product of 2,4-dichloro-6-tert-octylamino-s-triazine and 4,4′-hexamethylenebis(amino-2,2,6,6-tetramethylpiperidine), polycondensation product of 1-(2-hydroxyethyl)-2,2,6,6-tetramethyl-4-hydroxypiperidine and succinic acid, polycondensation product of 4,4′-hexamethylenebis-(amino-2,2,6,6-tetramethylpiperidine) and 1,2-dibromoethane, tetrakis(2,2,6,6-tetramethylpiperidin-4-yl) 1,2,3,4-butanetetracarboxylate, tetrakis(1,2,2,6,6-pentamethylpiperidin-4-yl) 1,2,3,4-butanetetracarboxylate, polycondensation product of 2,4-dichloro-6-morpholino-s-triazine and 4,4′-hexa-methylenebis(amino-2,2,6,6-tetramethylpiperidine), N,N′,N″,N‴-tetrakis[(4,6-bis(butyl-2,2,6,6-tetramethyl-piperidin-4-yl)-amino-s-triazin-2-yl]-1,10-diamino-4,7-diaza decane, mixed [2,2,6,6-tetramethylpiperidin-4-yl/b,b′,b′-tetramethyl-3,9-(2,4,8,10-tetra-oxaspiro[5.5]-undecane) diethyl] 1,2,3,4-butanetetracarboxylate, mixed [1,2,2,6,6-pentamethylpiperidin-4-yl/,b,b′,b′-tetramethyl-3,9-(2,4,8,10-tetraoxaspiro[5.5]undecane)diethyl] 1,2,3,4-butanetetracarboxylate, octamethylene bis(2,2,6,6-tetramethylpiperidin-4-carboxylate) and 4,4′-ethylenebis(2,2,6,6-tetramethylpiperazin-3-one).

A most preferred hindered amine compound is bis(2,2,6,6-tetramethylpiperidin-4-yl) sebacate, the polycondensation product of 1-(2-hydroxyethyl)-2,2,6,6-tetramethyl-4-hydroxypiperdine and succinic acid, the polycondensation product of 2,4-dichloro-6-tert-octylamino-s-triazine and 4,4′-hexamethylenebis(amino-2,2,6,6-tetramethylpiperidine) or N,N′,N″,N‴-tetrakis[(4,6-bis(butyl-(2,2,6,6-tetramethyl-piperidin-4-yl)a mino)-s-triazine-2-yl]- 1,10-diamino-4,7-diazadecane.

The following examples are presented for the purpose of illustration only and are not to be construed to limit the nature or scope of the instant invention in any manner whatsoever.

Example 1:

2,2-Bis[4-(2-(2,6-di-tert-butyl-4-(2-(methoxycarbonyl)-ethyl)phenoxy)-3-tert-butyl-1,3,2-oxazaphospholid in-5-ylethyloxy)phenyl]propane (according to formula I)

To a solution of 12.2 g (0.025 mole) of 2,2-bis[4-(3-tert-butylamino)-2-hydroxy1-propoxy)phenyl]propane at -78°C in 300 ml of methylene chloride in a 1000 ml, three-necked flask equipped with a mechanical overhead stirrer, a thermometer and an addition funnel and under a blanket of nitrogen is added dropwise a solution of 19.6 g (0.05 mole) of 2,6-di-tert-butyl-4-(2-(methoxycarbonyl)-ethyl)phenylphosphorodichlorodite and 9.1 g (0.09 mole) of triethylamine in 100 ml of methylene chloride. The reaction mixture is allowed to warm to room temperature slowly while stirring for 18 hours. The opaque white solution is concentrated under reduced pressure and then diluted with 150 ml of ethyl acetate. The solid triethylamine hydrochloride salt is removed by filtration through a pad of celite, which is washed well with additional ethyl acetate. The filtrate is concentrated again to give 28 g of a viscous oil. Purification is accomplished by medium pressure chromatography on silica gel eluting with 10% hexane in ethyl acetate. The title compound is obtained in a yield of 6.0 g (21%) as a clear viscous oil.

Analysis:

| | |
|---|---|
| Calc. for $C_{65}H_{96}N_2O_{10}P_2$: | C, 69.2; H, 8.6; N, 2.5. |
| Found: | C, 69.1; H, 8.8; N, 2.3. |

Example 2:

1,6-Bis[2-(2,6-di-tert-butyl-4-(2-(n-octadecyloxycarbonyl)-ethyl)phenoxy)-3-tert-butyl-1,3,2-oxazaphosp holidin-5-yl]-2,5-dioxahexane (according to formula I)

The general procedure of Example 1 is repeated using 2.8 g (8.3 mmol) of 2,2,15,15-tetra-methyl-5,12-dihydroxy-3,14-diaza-7,10-dioxahexadecane, 10.4 g (17.5 mmol) of 2,6-di-tert-butyl-4-(2-(n-octadecyloxycarbonyl)ethyl)phenylphosphorodichl orodite, 10 ml (35 mmol) of triethylamine and 85 ml of methylene chloride to give 7.5 g of a yellow oil. Purification by chromatography (silica gel; 9/1 v/v hexane/ethyl acetate as eluent) gives 3.3 g (28% yield) of the title compound as a colorless oil.

Analysis:

Calcd for $C_{86}H_{154}N_2O_{10}P_2$: C, 71.8; H, 10.8; N, 1.9.
Found: C, 72.1; H, 10.9; N, 1.6.

Example 3: Process Stabilization of Polypropylene at 280°C

This example illustrates the thermal stabilizing effectiveness of the instant compounds in new technology polypropylene.

The base formulation comprises unstabilized, new technology polypropylene (®PROFAX 6501, HIMONT) containing 0.1% by weight of calcium stearate. The test stabilizer is solvent blended onto polypropylene from a solution in methylene chloride. After removal of the solvent by evaporation under reduced pressure, the stabilized resin formulation is extruded at 80 rpm from a 2.54 cm diameter extruder at 280°C. The residence time in the extruder is 45 seconds.

After each of the first and fifth extrusions, the melt flow rate (in grams/10 minutes) is measured according to ASTM method D-1238 on the pellets obtained. The closer the melt flow rate after the fifth extrusion is to the melt flow rate after the first extursion the less polymer degradation has occurred. Close values indicate superior process stabilization efficacy bestowed by the test stabilizer.

The test results are shown in table 1 below.

Table 1

| Additive* | AdditiveConcentration (% by weight) | Melt Flow Rate After Extrusion 1 | 5 |
|---|---|---|---|
| AO A | 0.1 | 16.6 | 29.2 |
| AO A plus Example 2 Compound | 0.1<br>0.05 | 12.2 | 17.8 |

*AO A is neopentanetetrayl tetrakis(3,5-di-tert-butyl-4-hydroxyhydrocinnamate

The instant compound in combination with a phenolic antioxidant provides superior process stabilization to polypropylene than does a phenolic antioxidant alone.

Example 4: Color Stabilization of Polypropylene Processed at 280°C

When polypropylene is extruded as described in Example 3, resin pellets obtained after the fifth extrusion are compression molded into 3.2 mm thick plaques at 193°C and specimen yellowness index (YI) values are determined according to ASTM method D-1925. Low YI values indicate less yellowing and discoloration. The results are given in table 2 below.

Table 2

| Additive* | AdditiveConcentration (% by weight) | Yellowness Index |
|---|---|---|
| AO A | 0.1 | 18.2 |
| AO A plus Example 2 Compound | 0.1<br>0.05 | 15.6 |

*AO A is neopentanetetrayl tetrakis(3,5-di-tert-butyl-4-hydroxyhydrocinnamate

The instant compound in combination with a phenolic antioxidant protects polypropylene from discoloration better than the antioxidant when used alone.

Example 5:

When following the general procedure of Example 3, a hindered amine compound is substituted for the

phenolic antioxidant, a combination of said hindered amine compound plus instant compound provides polypropylene with effective stabilization against thermal oxidative degradation.

Example 6:

2-(2,6-Di-tert-butyl-4-methylphenoxy)-4,4-dimethyl- 1,3,2-oxazaphospholidine (according to formula V)

Into a cooled solution of 8.0 g (25 mmol) of 2,6-di-tert-butyl-4-methylphenylphosphorodichloridite in 100 ml of toluene is added dropwise a solution of 2.22 g (25 mmol) of 2-amino-2-methyl-1-propanol and 7.0 ml (50 mmol) of triethylamine in 10 ml of toluene. During the addition, the reaction temperature is maintained at 3 to 5°C. After the addition is complete, the reaction mixture is allowed to warm to ambient temperature and stirring is continued for 16 hours. The resultant suspension is filtered and the filtrate is evaporated under reduced pressure to remove solvent and to give 8.5 g of solid residue. Recrystallization from 25 ml of isopropanol gives the title compound in a yield of 1.8 g (21%) as a white solid melting at 120-123°C.

Analysis:

| | |
|---|---|
| Calcd for $C_{19}H_{32}NO_2P$: | C, 67.6; H, 9.6; N, 4.1. |
| Found: | C, 67.7; H, 9.8; N, 3.7. |

Example 7:

2-[2,6-Di-tert-butyl-4-(2-(n-octadecyloxycarbonyl)ethyl)phenoxy]- 1,3,2-ox-azaphospholidine (according to formula V)

The general procedure of Example 6 is repeated using 14.9 g (25 mmol) of 2,6-di-tert-butyl-4-(2-(n-octadecyloxycarbonyl)ethyl)-phenylphosphorodich1oridite, 1.53 g (25 mmol) of ethanolamine, 7 ml (50 mmol) of triethylamine and 60 ml of methylene chloride to give the title compound in a yield of 10.5 g (68%) as a white solid melting at 49-51°C.

Analysis:

| | |
|---|---|
| Calcd for $C_{37}H_{66}NO_2P$: | C, 77.7; H, 10.7; N, 2.3. |
| Found: | C, 71.2; H, 10.4; N, 2.2. |

Example 8:

2-[2,6-Di-tert-butyl-4-(2-n-octadecyloxycarbonyl)ethyl)phenoxy] -4,4-di-methyl-1,3,2-oxazaphospholidine (according to formula V)

The general procedure of Example 6 is repeated using 64.0 g (100 mmol) of 2,6-di-tert-butyl-4-(2-(n-octadecyloxycarbonyl)-ethyl)phenylphosphorodichloridite, 9.5 ml (100 mmol) of 2-amino-2-methyl-1-propanol, 27.8 ml (200 mmol) of triethylamine and 332 ml of toluene to give a yellow oil which solidifies on standing. Recrystallization from isopropanol containing triethylamine gives the title compound in a yield of 8.2 g (13% as a white solid melting at 53-56°C.

Analysis:

| | |
|---|---|
| Calcd for $C_{39}H_{70}NO_4P$: | C, 72.3; H, 10.9; N, 2.2. |
| Found: | C, 71.9; H, 11.2; N, 1.9. |

Example 9:

2-[2,6-Di-tert-butyl-4-(2-(methoxycarbonyl)ethyl)phenoxy]-4,4 -dimethyl-1,3,2-oxazaphospholidine (according to formula V)

The general procedure of Example 6 is repeated using 30.2 g (77 mmol) of 2,6-di-tert-butyl-4-(2-(methoxycarbonyl)ethyl)-phenylphosphorodichloridite, 7.6 ml (80 mmol) of 2-amino-2-methyl-1-propanol, 22.3 ml (160 mmol) of triethylamine and 280 ml of toluene to give a yellow solid. Recrystallization from acetonitrile gives the title compound in a yield of 4.1 g (13%) as a white solid melting at 124-126°C.

Analysis:

| | |
|---|---|
| Calcd for $C_{22}H_{36}NO_4P$: | C, 64.5; H, 8.9; N, 3.4. |
| Found: | C, 64.5; H, 9.1; N, 3.2. |

Example 10: Process Stabilization of Polypropylene at 274°C

The base formulation comprises unstabilized, old technology polypropylene (®PROFAX 6501, Himont) containing 0.1% by weight of calcium stearate. The test stabilizer is solvent blended onto polypropylene from

a solution in methylene chloride. After removal of the solvent by evaporation under reduced pressure, the stabilized resin formulation is extruded at 75 prm from a 2.54 cm diameter extruder at 274°C with a residence time of 75 seconds.
After each of the first and fifth extrusions, the melt flow rate (in grams/10 minutes) is determined by ASTM method D1238 on the pellets obtained from the extruder. Close values indicate superior process stabilisation efficacy bestowed by the test stabilizer. The results are given in table 3 below.

Table 3

| Additive* | AdditiveConcentration (% by weight) | Melt Flow Rate After Extrusion 1 | 5 |
|---|---|---|---|
| none | -- | 11.4 | 50.6 |
| Compound of Example 6 | 0.05 | 6.3 | 19.7 |
| Compound of Example 8 | 0.05 | 7.4 | 14.9 |
| Compound of Example 9 | 0.05 | 4.8 | 11.8 |

Each of the instant compounds tested protected polypropylene from thermal oxidative degradation.

<u>Example 11</u>: Process Stabilization of Polypropylene at 280°C

The base formulation comprises unstabilized, new technology polypropylene (®PROFAX 6501, Himont) containing 0.1% by weight of calcium stearate. The test stabilizer is solvent blended onto the polypropylene from a solution in methylene chloride. After removal of the solvent by evaporation under reduced pressure, the stabilized resin formulation is extruded at 80 rpm from a 2.54 cm diameter extruder at 280°C with a residence time of 45 seconds.
After each of the first and fith extrusions, the melt flow rate (in grams/10 minutes) is determined by ASTM method D1238 on the pellets obtained from the extruder. The results are given in table 4 below.

Table 4

| Additive | AdditiveConcentration (% by weight) | Melt Flow Rate After Extrusion 1 | 5 |
|---|---|---|---|
| none | -- | 10.7 | >30.0 |
| AO A | 0.1 | 4.3 | 12.7 |
| Compound of Example 7 | 0.1 | 2.6 | 5.7 |
| AO A plus Example 7 Compound | 0.1<br>0.05 | 1.6 | 3.2 |

The instant compound protects the polypropylene from thermal oxidative degradation far better than does the phenolic antioxidant. A combination of phenolic antioxidant plus instant compound provides even better stabilization efficacy.

<u>Example 12</u>: Color Stabilization of Polypropylene

This example illustrates the color stabilizing effectiveness of the instant compounds in combination with a

phenolic antioxidant in polypropylene.

Using the pellets obtained after each of the first and fifth extrusions as described in Example 6, the pellets are compression molded into 3.2 mm thick plaques at 193°C. Specimen yellowness index (YI) values are determined according to ASTM method D1925. Lower YI values indicate less discoloration. The results are given in table 5 below.

Table 5

| Additive* | AdditiveConcentration (% by weight) | Yellowness Index After Extrusion 1 | 5 |
|---|---|---|---|
| AO A | 0.1 | 8.4 | 10.5 |
| AO A plus Example 2 Compound | 0.1<br>0.05 | 5.1 | 7.7 |

The instant compound in combination with the phenolic antioxidant reduces the discoloration of the polypropylene significantly.

Example 13:

When, following the general procedure of Example 11, a hindered amine compound is substituted for the phenolic antioxidant, a combination of said hindered amine compound plus instant compound provides polypropylene with effective stabilization against thermal oxidative degradation.

Example 14:

2-[2,6-Di-tert-butyl-4-(2-(n-octadecyloxycarbonyl)ethyl)-phenoxy]- 1,3,2-benzoxazaphospholidine (according to formula VII)

Into a cooled solution of 29.8 g (50 mmol) of 2,6-di-tert-butyl-4-[2-(n-octadecyloxycarbonyl)ethyl]-phenyl phosphorodichloridite in 100 ml of methylene chloride at dry ice/acetone temperature is added a solution of 5.46 g (50 mmol) of 2-aminophenol and 13.95 ml (100 mmol) of triethylamine in 25 ml of methylene chloride. After the addition is complete, the mixture is warmed to room temperature with continual stirring. After 16 hours, the reaction mixture is concentrated under reduced pressure, mixed with 50 ml of toluene and filtered to remove insoluble solids. The filtrate is reconcentrated, dissolved in hexane and treated with decolorizing charcoal. The resultant mixture is clarified and the filtrate concentrated under reduced pressure to give 27.6 g of the title compound as a white solid melting at 58-65°C.

$^{31}P$ NMR ($C_6D_6$) 133.4 ppm

Analysis:

| | |
|---|---|
| Calcd for $C_{41}H_{66}NO_4P$: | C, 73.7; H, 10.0; N, 2.1. |
| Found: | C, 73.7; H, 9.9; N, 1.9. |

Example 15:

2-(2,4,6-Tri-tert-butylphenoxy)-1,3,2-benzoxazaphospholidine (according to formula VII)

Using the general procedure of Example 14, 12.0 g (33 mmol) of 2,4,6-tri-tert-butylphenyl phosphorodichloridite, 3.6 g (33 mmol) of 2-aminophenol, 9.3 ml (66 mmol) of triethylamine and 75 ml of methylene chloride are reacted to give 3.5 g of the title compound as an off-white solid.

$^{31}P$ NMR 132.2 ($C_6D_6$) 132.2 ppm

Analysis:

| | |
|---|---|
| Calcd for $C_{24}H_{34}NO_2P$: | C, 72.2; H, 8.6; N, 3.5. |
| Found: | C, 71.9; H, 8.7; N, 3.4. |

Example 16: Process Stabilization of Polypropylene at 280°C

The base formulation comprises unstabilized, new technology polypropylene (®Profax 6501, Himont) containing 0.1% by weight of calcium stearate. The test stabilizer is solvent blended onto the polypropylene from

a solution in methylene chloride. After removal of the solvent by evaporation under reduced pressure, the stabilized resin formulation is extruded at 80 rpm from a 2.54 cm diameter extruder at 280°C with a residence time of 45 seconds.

After each of the first and fifth extrusions, the melt flow rate (in grams/10 minutes) is determined by ASTM method D1238 on the pellets obtained from the extruder. The nominal melt flow rate for Profax 6501 with 0.5% by weight of 2,6-di-tert-butyl-4-methylphenol (BHT) is 3.1 g/10 min.

The results are given in table 6 below.

Table 6

| Additive* | AdditiveConcentration (% by weight) | Melt Flow Rate After Extrusion 1 | 5 |
|---|---|---|---|
| none | -- | 10.7 | >30.0 |
| AO A | 0.1 | 4.3 | 12.7 |
| Compound of Example 14 | 0.1 | 2.6 | 5.7 |
| AO A plus Example 14 Compound | 0.1<br>0.05 | 2.7 | 6.1 |

*AO A is neopentanetetrayl tetrakis-(3,5-di-tert-butyl-4-hydroxyhydrocinnamate

The instant compound of Example 14 is more effective than the phenolic antioxidant as a process stabilizer for polypropylene.

Example 17: Oxygen Uptake Screening of Antioxidants

This example illustrates the effectiveness of the instant compounds as radical initiated oxidation inhibitors.

A chlorobenzene solution (20 ml), 1.0 molar in tetralin and 2 x $10^{-3}$ molar in test compound, is charged into a 100 ml reaction flask equipped with a ball-joint side arm. The assembly is then connected to a pressure transducer which allows automatic monitoring of pressure changes within the sealed flask as oxygen is consumed. The system is partially evacuated and flushed with pure oxygen five times, sealed and placed in an oil bath at 60°C and stirred with a magnetic stirrer bar. After thermal equilibration (15 minutes), the system is vented to atmospheric pressure, 98.5 mg,(0.60 mmol, 3.0 x $10^{-2}$molar) of 2,2′-azobis(isobutyronitrile), AIBN, is added, and the system resealed. The pressure in the sealed system is monitored continuously as oxygen is being consumed (total gas volume is approximately 95 ml).

By measuring oxygen consumption as a function of time in an AIBN-initiated oxidation, the length of the induction period and the time required to absorb 1.0 mmol of oxygen are determined. The higher the time, the more effective is the stabilizer. The results are given in table 7 below.

Table 7

| Additive* | Induction Period (in hours) | Time to 1.0 mmol of Oxygen Uptake (in hours) |
|---|---|---|
| None | 0.0 | 3.7 |
| Compound of Example 14 | 5.6 | 12.0 |

Example 18

When, following the general procedure of Example 16, a hindered amine compound is substituted for the phenolic antioxidant, a combination of said hindered amine compound plus instant compound provides polypropylene with effective stabilization against thermal oxidative degradation.

**Claims**

1. A poly-1,3,2-oxaza-phospholidine compound of formula I

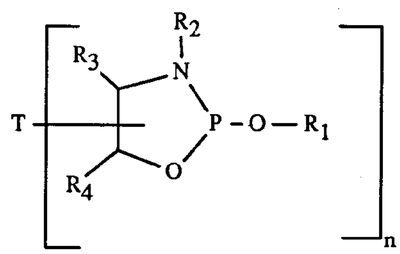

(I)

wherein n is an integer from 2 to 4,
$R_1$ is alkyl of 1 to 20 carbon atoms, cycloalkyl of 5 to 12 carbon atoms, phenylalkyl of 7 to 15 carbon atoms, said phenylalkyl substituted on the phenyl ring by one or two alkyl groups of 1 to 12 carbon atoms, aryl of 6 to 10 carbon atoms or a radical of formula II

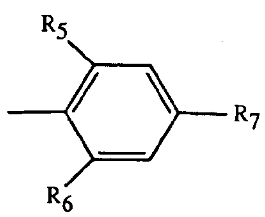

(II)

$R_2$ , $R_3$ and $R_4$ are independently hydrogen, alkyl of 1 to 20 carbon atoms, cycloalkyl of 5 to 12 carbon atoms, phenylalkyl of 7 to 15 carbon atoms, said phenylalkyl substituted on the phenyl ring by one or two alkyl groups of 1 to 12 carbon atoms, aryl of 6 to 10 carbon atoms or said aryl substituted by one or two alkyl groups of 1 to 12 carbon atoms, or
$R_3$ and $R_4$ together are straight or branched chain alkylene of 3 to 6 carbon atoms so that, with the two ring carbon atoms to which they are attached, they form a cycloalkyl ring of 5 to 6 carbon atoms,
$R_5$ and $R_6$ are independently hydrogen, alkyl of 1 to 18 carbon atoms, cycloalkyl of 5 to 12 carbon atoms, phenylalkyl of 7 to 15 carbon atoms or said phenylalkyl substituted on the phenyl ring by one or two alkyl groups of 1 to 12 carbon atoms,
$R_7$ is hydrogen, alkyl of 1 to 18 carbon atoms or a group of the formula $-(CH_2)_k COOR_8$ where k is 0,1 or 2, and $R_8$ is hydrogen or alkyl of 1 to 20 carbon atoms, and
when n is 2, T is a direct bond, -O-, -S-, -SO-, $-SO_2-$, -CO- or -NR- where R is alkyl of 1 to 8 carbon atoms, or
when n is 2-4, T is an n-valent aliphatic hydrocarbon radical containing 1 to 20 carbon atoms, which radical is linear or branched, or which radical is interrupted by one or more moieties selected from the group consisting of -O-, -S-, -SO-, $-SO_2-$, -CO-, -NR-, phenylene and mixtures thereof, where R is alkyl of 1 to 8 carbon atoms.

2. A compound according to claim 1 wherein $R_1$ is the radical of formula II

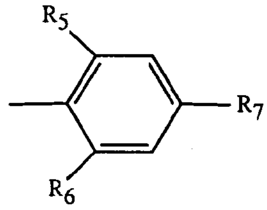 (II)

where $R_5$ , $R_6$ and $R_7$ are independently hydrogen, alkyl of 1 to 18 carbon atoms, cycloalkyl of 5 to 7 carbon atoms or phenylalkyl of 7 to 9 carbon atoms, or $R_7$ is also $-(CH_2)_k-COOR_8$ where k is 0, 1 or 2 and $R_8$ is alkyl of 1 to 20 carbon atoms.

3. A compound according to claim 2 wherein $R_1$ is the radical of formula II where $R_5$ is hydrogen or alkyl of 1 to 8 carbon atoms, $R_8$ is alkyl of 3 to 8 carbon atoms and $R_7$ is alkyl of 3 to 8 carbon atoms or $-CH_2CH_2CO-OR_8$ where $R_8$ is alkyl of 1 to 18 carbon atoms.

4. A compound according to claim 1 wherein $R_2$ is alkyl of 1 to 8, especially 4 to 8.

5. A compound according to claim 1 wherein $R_3$ and $R_4$ are each hydrogen.

6. A compound according to claim 1 wherein n is 2, and T is a straight or branched alkylene of 2 to 24 carbon atoms interrupted by two or more -O- atoms, or T is a group of formula III

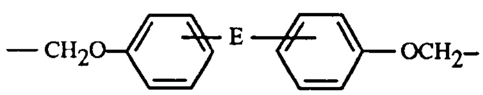 (III)

where E is a direct bond, $-CH_2-$, alkylidene of 2 to 8 carbon atoms, -O-, -S-, -SO-, $-SO_2-$ or -NR-, where R is alkyl of 1 to 8 carbon atoms.

7. A compound according to claim 6 wherein T is alkylene of 6 to 10 carbon atoms interrupted by two or more -O- atoms, or T is a group of formula IV

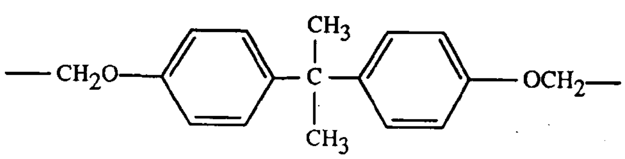 (IV)

8. A compound of formula V

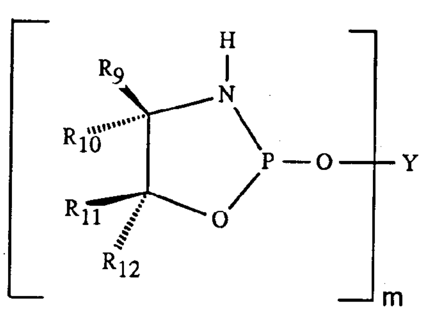 (V)

wherein $R_9$, $R_{10}$, $R_{11}$ and $R_{12}$ are independently hydrogen, alkyl of 1 to 20 carbon atoms, cycloalkyl of 5 to 12 carbon atoms, phenylalkyl of 7 to 15 carbon atoms or said phenylalkyl substituted on the phenyl ring by one or two alkyl of 1 to 12 carbon atoms, aryl of 6 to 10 carbon atoms or said aryl subsrituted by one or two alkyl of 1 to 12 carbon atoms, or $R_9$ and $R_{10}$ together, or $R_{11}$ and $R_{12}$ together, or one of $R_9$ or $R_{10}$

together with one of $R_{11}$ or $R_{12}$ together; with the ring carbon atom or atoms to which they are attached form a cycloalkyl ring of 5 to 6 carbon atoms; m is an integer from 1 to 4, Y is an m-valent aliphatic or aromatic radical,
when m is 1, Y is alkyl of 1 to 20 carbon atoms, said alkyl interrupted by one to nine -O-, -S-, -SO-, $-SO_2-$, -CO-,-COO-, -NR\- or mixtures thereof where R\ has the same definition as $R_9$; or Y is aryl of 6 to 10 carbon atoms or said aryl substituted by one, two or three alkyl of 1 to 12 carbon atoms, or said aryl substituted by $-(CH_2)_k-COOR_8$ where k is 0, 1 or 2 and $R_8$ is hydrogen or alkyl of 1 to 20 carbon atoms; or Y is phenylalkyl of 7 to 15 carbon atoms or where the alkyl is interrupted by one or two -O-. -S-, -SO- or $-SO_2-$, or where the phenyl ring is substituted by one, two or three alkyl of 1 to 12 carbon atoms;
when m is 2, Y is straight or branched chain alkylene of 2 to 31 carbon atoms, said alkylene interrupted by one to seven -O-, -S-, -SO- or $-SO_2-$ moieties, cycloalkylene of 6 to 12 carbon atoms, phenylene, phenylene substituted by one to four alkyl groups of 1 to 4 carbon atoms, xylylene or phenylene-A-phenylene where A is a direct bond, methylene, alkylidene of 2 to 8 carbon atoms, -O-, -S-, -SO-, $-SO_2-$, -CO- or -NR\-;
when m is 3, Y is alkanetriyl of 3 to 8 carbon atoms or benzenetriyl; and
when m is 4, Y is alkanetetrayl of 4 to 6 carbon atoms.

**9.** A compound according to claim 8 wherein $R_9$, $R_{10}$, $R_{11}$ and $R_{12}$ are independently hydrogen or alkyl of 1 to 4 carbon atoms.

**10.** A compound according to claim 8 wherein m is 1 and Y is a radical of formula VI

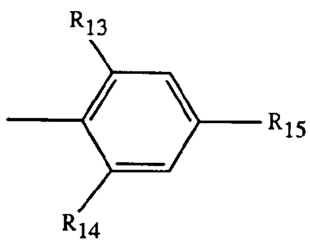

(VI)

wherein $R_{13}$, $R_{14}$ and $R_{15}$ are independently hydrogen, alkyl of 1 to 18 carbon atoms, cycloalkyl of 5 to 7 carbon atoms or phenylalkyl of 7to 9 carbon atoms, or $R_{15}$ is also $-(CH_2)_k-COOR_8$ where k is 0,1 or 2 and $R_8$ is hydrogen or alkyl of 1 to 20 carbon atoms.

**11.** A compound according to claim 10 wherein m is 1 and Y is a radical of formula VI where $R_{13}$ is hydrogen or alkyl of 1 to 8 carbon atoms, $R_{14}$ is alkyl of 3 to 8 carbon atoms and $R_{15}$ is alkyl of 3 to 8 carbon atoms or $-CH_2CH_2COR_8$ where $R_8$ is alkyl of 1 to 18 carbon atoms.

**12.** A compound of formula I

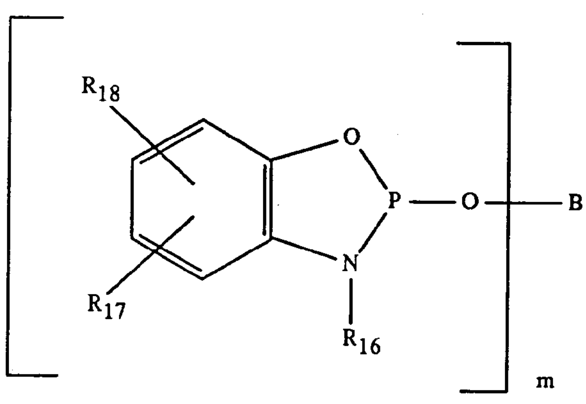

(VII)

wherein m is an integer from 1 to 4, $R_{16}$, $R_{17}$and $R_{18}$ are independently hydrogen, alkyl of 1 to 18 carbon atoms, cycloalkyl of 5 to 12 carbon atoms, phenylalkyl of 7 to 15 carbon atoms or said phenylalkyl substituted on the phenyl ring by alkyl of 1 to 12 carbon atoms, aryl of 6 to 10 carbon atoms or said aryl substituted by one or two alkyl of 1 to 12 carbon atoms, and B is an m-valent aliphatic or aromatic radical,
when m is 1, B is alkyl of 8 to 20 carbon atoms, said alkyl interrupted by one to nine -O-, -S-, -SO- $-SO_2-$, -CO-, -COO-, $-CONR_{19}-$ or $-NR_{20}$ - or mixtures thereof where $R_{19}$ and $R_{20}$ independently have the same definitions as $R_{16}$, or B is aryl of 6 to 10 carbon atoms which is substituted by one, two or three alkyl of 1 to 12 carbon atoms or said aryl substituted by $-(CH_2)_k$ $-COOR_{21}$ where k is 0, 1, or 2, and $R_{21}$ is alkyl of 1 to 20 carbon atoms, or B is phenylalkyl of 7 to 15 carbon atoms or where the alkyl is interrupted by one or two -O-, -S-, -SO- or $-SO_2-$, or where the phenyl ring is substituted by one, two or three alkyl of 1 to 12 carbon atoms,
when m is 2, B is a straight or branched chain alkylene of 2 to 31 carbon atoms, said alkylene interrupted by one to seven -O-, -S-, -SO- or $-SO_2-$ moieties, cycloalkylene of 6 to 12 carbon atoms, phenylene, phenylene substituted by one to four alkyl groups of 1 to 4 carbon atoms, xylylene, or phenylene-A-phenylene where A is a direct bond, methylene, alkylidene of 2 to 8 carbon atoms, -O-, -S-, -SO-, $-SO_2-$, -CO- or $-NR_{20}$,
when m is 3, B is alkanetriyl of 3 to 6 carbon atoms or benzenetriyl, and
when m is 4, B is alkanetetrayl of 4 to 6 carbon atoms.

**13.** A compound according to claim 12 where $R_{16}$ $R_{17}$ and $R_{18}$ independently are hydrogen or alkyl of 1 to 8 carbon atoms.

**14.** A compound according to claim 12 where m is 1 and B is the monovalent radical of formula VIII

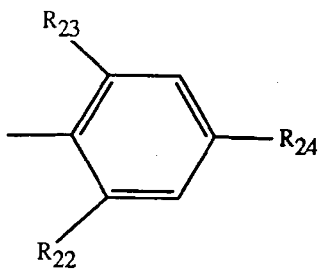

(VIII)

where $R_{22}$, $R_{23}$ and $R_{24}$ are independently hydrogen, alkyl of 1 to 18 carbon atoms, cycloalkyl of 5 to 7 carbon atoms or phenylalkyl of 7 to 9 carbon atoms, or $R_{24}$ is also $-(CH_2)_k$ $-COOR_{21}$ where k is 0,1 or 2 and $R_{21}$ is alkyl of 1 to 20 carbon atoms.

**15.** A compound according to claim 14 where m is 1 and B is formula VIII where $R_{22}$ is hydrogen or alkyl of 1 to 8 carbon atoms, $R_{23}$ is alkyl of 3 to 8 carbon atoms and $R_{24}$ is alkyl of 3 to 8 carbon atoms or $-CH_2CH_2CO-OR_{21}$ where $R_{21}$ is alkyl of 1 to 18 carbon atoms.

**16.** A stabilized composition which comprises
(a) an organic material subject to oxidative, thermal or actinic degiadation, and
(b) a compound of formula I according to claim 1 or a compound of formula V according to claim 8 or a compound of formula VII according to claim 12.

**17.** A composition according to claim 16 wherein the organic material is a synthetic polymer, especially a polyolefin.

**18.** A composition according to claim 16 which additionally contains a phenolic antioxidant.

**19.** A composition according to claim 16 which additionally contains a hindered amine compound.